# EUROPÄISCHE PATENTSCHRIFT

(11) **EP 3 765 545 B1**
(45) Veröffentlichungstag und Bekanntmachung des Hinweises auf die Patenterteilung: **26.08.2026**
(21) Anmeldenummer: 19709532.6
(22) Anmeldetag: 14.03.2019
(51) Int. Cl.: C08G 18/54, C08G 18/73, C08G 18/79, C09D 11/00, C08G 18/42

(54) **VERFAHREN ZUR HERSTELLUNG LAGERSTABILER, PIGMENTIERTER ISOCYANATGRUPPEN-HALTIGER FORMULIERUNGEN**
PREPARATION OF STORAGE-STABLE PIGMENTED FORMULATIONS CONTAINING ISOCYANATE GROUPS
PROCÉDÉ DE PRÉPARATION D'UNE FORMULATION CONTENANT DES GROUPES ISOCYANATE, PIGMENTÉES, STABLES AU STOCKAGE

(30) Priorität: 15.03.2018 EP 18162062
(43) Veröffentlichungstag der Anmeldung: 20.01.2021
(73) Patentinhaber: Covestro Deutschland AG, 51373 Leverkusen (DE)
(72) Erfinder: TILLACK, Jörg, 42699 Solingen (DE); ACHTEN, Dirk, 51375 Leverkusen (DE); BACH, Monika, 70771 Leinenfelden-Echterdingen (DE); WEBER, Achim, 73776 Altbach (DE); SCHUSTER, Fabian, 51373 Leverkusen (DE)
(74) Vertreter: Levpat
(86) Internationale Anmeldenummer: PCT/EP2019/056477
(87) Internationale Veröffentlichungsnummer: WO 2019/175344

(56) Entgegenhaltungen:
- DE-T2- 60 029 067

## Beschreibung

Die Erfindung betrifft ein Verfahren zur Herstellung einer Isocyanatgruppen-haltigen Formulierung.

Formulierungen, die als Tinten für den Druck eingesetzt werden können, sind seit langer Zeit bekannt und heutiger Stand der Technik. Diese Formulierungen sind überwiegend nicht reaktiv sondern fein dispergierte Pigmente bzw. gelöste Farbstoffe in klassischen Lösemitteln, Wasser oder Öl. Zur Fixierung der Pigmente enthalten die Formulierungen häufig noch einen geringen Anteil an einem Bindemittel.

Auch die Behandlung von Pigmenten mit Isocyanaten ist in der Literatur bekannt. So wird in der US 3,156,576 aus dem Jahre 1964 bereits die Modifikation von Pigmenten wie Carbon Black, Silikat, Titandioxid und ähnlichen Verbindungen mit Isocyanaten beschrieben. Das trockene Pigment wird hier in eine trockene Toluol /TDI-Mischung mit einem TDI Gehalt von 10 % eingearbeitet und anschließend die überschüssige Flüssigkeit bei 75 °C verdampft. Das so modifizierte Pigment wird unmittelbar im Anschluss unter Ausschluss von Feuchtigkeit in ein Silikon eingearbeitet, welches dann ausgehärtet wird.

In der US 4,075,152 wird ein Verfahren beschrieben, wie man die Flokkulation von Pigmenten in 2K PU Coatings verhindern kann. Hierzu wird zunächst eine Isocyanat/Pigment Slurry hergestellt und anschließend diese Slurry direkt in ein Polyol gemischt. Die erhaltenen eingefärbten Polyole zeigten keine Pigmentflokkulation.

In den angeführten Beispielen wird zwar benannt, dass die Vorbehandlung von Pigmenten mit Isocyanaten vorteilhaft sein kann, es ist hier aber keine Lehre zu entnehmen, wie man eine lagerstabile, pigmentierte, Isocyanatgruppen-haltige Formulierung herstellen kann.

In der US 6,341,856 wird dagegen die Herstellung einer reaktiven Tinte für den Digitaldruck beschrieben. Hier werden Verbindungen mit mindestens einer C-H-aktiven Gruppe, Verbindungen mit blockierten C-H-reaktiven Gruppen, welches die Reaktion des aktiven Wasserstoffs mit der C-H-reaktiven Gruppe verhindert, Emulgatoren und Pigmente oder Farbstoffe zu einer bei Raumtemperatur stabilen Inkjettinte verarbeitet. Speziell werden auch Polyole und Isocyanate genannt. Die Blockierung kann entweder chemisch oder durch eine Verkapselung geschehen.

Nachteil der Lehre aus US 6,341,856 ist die Blockierung. Zum einen ist die Blockierung aufwendig und somit teuer, zum anderen muss man die Isocyanatgruppe erst wieder deblockieren, um mit den deblockierten Isocyanatgruppen eine Reaktion ablaufen zu lassen.

Aufgabe war es daher, mindestens einen Nachteil des Standes der Technik zumindest zum Teil zu überwinden.

Eine weitere Aufgabe der Erfindung war es eine pigmenthaltige Formulierung herzustellen, die bei Ihrer Verarbeitung reaktive Isocyanatgruppen enthält.

Weiterhin war eine Aufgabe der Erfindung eine pigmenthaltige Formulierung herzustellen, die über einen möglichst langen Verarbeitungszeitraum, bevorzugt über mehrere Minuten oder bevorzugt über mehrere Stunden reaktive Isocyanatgruppen aufweist.

Es war weiterhin eine Aufgabe der Erfindung ein Verfahren bereitzustellen, das es ermöglicht eine lagerstabile Isocyanatgruppen-haltige Formulierung zu generieren.

Eine weitere Aufgabe der Erfindung war es eine Isocyanatgruppen-haltige Formulierung als Tinte, insbesondere für den Digitaldruck herzustellen.

Gegenstand der Erfindung ist daher ein Verfahren zur Herstellung einer Isocyanatgruppen-haltigen Formulierung mindestens mit den Schritten:
i. Anreiben mindestens eines Pigments in mindestens einem Anreibeharz in Anwesenheit mindestens eines Netzmittels und/oder Dispergiermittels unter Erhalt einer Pigmentanreibung,
ii. gegebenenfalls Verdünnen der erhaltenen Pigmentanreibung aus Schritt i. mit Lösungsmittel,
iii. Mischen der Pigmentanreibung aus Schritt i. oder Schritt ii. mit einer Isocyanatgruppen-haltigen Komponente unter Erhalt der Isocyanatgruppen-haltigen Formulierung,
wobei das molare Verhältnis der Summe der Isocyanatgruppen zu der Summe aller isocyanatreaktiven Gruppen in der Formulierung mindestens 8:1 beträgt.

Ein weiterer Gegenstand der Erfindung ist ein Verfahren zur Herstellung von lagerstabilen Isocyanatgruppen-haltige Formulierungen mindestens mit den Schritten:
i. Anreiben mindestens eines Pigments in mindestens einem Anreibeharz in Anwesenheit mindestens eines Netzmittels und/oder Dispergiermittels unter Erhalt einer Pigmentanreibung, wobei die üblichen, dem Fachmann bekannten, Dispergierapparate verwendet werden können, bis die gewünschte Teilchengröße des mindestens eines Pigments erreicht wird,
ii. gegebenenfalls Verdünnen der erhaltenen Pigmentanreibung aus Schritt i. mit Lösungsmittel,
iii. Mischen der Pigmentanreibung aus Schritt i. oder Schritt ii. mit einer Isocyanatgruppen-haltigen Komponente unter Erhalt der Isocyanatgruppen-haltigen Formulierung,
wobei das Verhältnis der Summe der Isocyanatgruppen zu der Summe aller isocyanatreaktiven Gruppen in der Formulierung mindestens 6:1, oder bevorzugt mindestens 8:1, oder bevorzugt mindestens 11:1, oder bevorzugt mindestens 15:1, oder bevorzugt mindestens 20:1, oder bevorzugt mindestens 50:1, oder bevorzugt mindestens 100:1 beträgt.

Bevorzugt werden in dem Verfahren die Schritte in der Reihenfolge zunächst i., dann gegebenenfalls ii. und erst im Anschluss iii. durchgeführt.

Stabile, insbesondere lagerstabile Isocyanatgruppen-haltige Formulierungen im Sinne der Erfindung zeichnen sich bevorzugt dadurch aus, dass die Viskosität während einer mindestens 3-tägigen, oder bevorzugt mindestens 5-tägigen, oder bevorzugt von mindestens 7-tägigen, oder bevorzugt von mindestens 10-tägigen, oder bevorzugt von mindestens 14-tägigen Lagerung bei 50 °C lediglich einen Viskositätsanstieg von ≤ 500 %, bevorzugt von ≤ 300 %, oder bevorzugt von ≤ 200 %, oder bevorzugt von ≤ 100 %, oder bevorzugt von ≤ 50 % aufweisen. Insbesondere bevorzugt ist der Anstieg der Viskosität während einer 3-tägigen Lagerung bei 50 °C der Formulierung ≤ 100 %, bezogen auf die Ausgangsviskosität. Weiterhin bevorzugt beträgt der Anstieg der Teilchengröße in der Isocyanatgruppen-haltige Formulierung, gemessen mit dynamischer Lichtstreuung nach Redispergierung von gegebenenfalls gebildeten weichen Sedimenten, bezogen auf Z-Average, maximal 500 %, bevorzugt maximal 200 %, bevorzugt maximal 100 %, bevorzugt maximal 50 % . Unter weichen Sedimenten wird im Rahmen der Erfindung verstanden, dass sich die Sedimente durch Schütteln redispergieren.

Bevorzugt zeichnen sich lagerstabile Isocyanatgruppen-haltige Formulierungen dadurch aus, dass sie während der Lagerung keine harten Sedimente bilden. Unter harten Sedimenten wird im Rahmen der Erfindung verstanden, dass sich die Sedimente durch Schütteln nicht redispergieren lassen. Unter Schütteln wird bevorzugt ein Schütteln per Hand oder mittels üblicher Labor-Schüttelmaschinen verstanden. Als Laborschüttler wurde ein IKA^{®} VORTEX 2 bei einer Drehzahl von 2000 rpm eingesetzt, wobei die Schüttelzeit bevorzugt in einem Bereich von 10 bis 60 Sekunden, oder bevorzugt in einem Bereich von 15 bis 40 Sekunden liegt.

Bevorzugt ist das Pigment homogen in der Formulierung hergestellt nach dem erfindungsgemäßen Verfahren verteilt. Unter homogen wird verstanden, dass der Prozentuale Anteil des Pigments in der Formulierung an unterschiedlichen Stellen nicht mehr als 10 Gew-%, bevorzugt nicht mehr als 5 Gew.-%, besonders bevorzugt nicht mehr als 1 Gew.-% von dem gemittelten Anteil an Pigment in der Formulierung abweicht.

Nicht Gegenstand der Erfindung ist eine lagerstabile Isocyanatgruppen-haltige Formulierung beinhaltend die Komponenten:
a. mindestens ein Pigment,
b. mindestens eine Isocyanatgruppen-haltige Komponente,
c. mindestens ein Netzmittel und/oder Dispergiermittel,
d. mindestens ein Anreibeharz, und
e. gegebenenfalls Lösemittel,
dadurch gekennzeichnet, dass die Formulierung nach Lagerung bei 50 °C über einen Zeitraum von mindestens 3 Tagen, oder bevorzugt von mindestens 5 Tagen, oder bevorzugt von mindestens 7 Tagen, oder bevorzugt von mindestens 10 Tagen, oder bevorzugt von mindestens 14 Tagen einen Viskositätsanstieg von weniger als 500 %, bevorzugt von weniger als 300 %, oder bevorzugt von weniger als 200 %, oder bevorzugt von weniger als 100 %, oder bevorzugt von weniger als 50 % aufweist, bezogen auf die Ausgangs-Viskosität der Formulierung. Die Ausgangs-Viskosität wird definiert als die Viskosität nach 1 Stunde nach zusammenfügen sämtlicher gewünschter Komponenten, insbesondere der ausgewählten Komponenten a. bis e..

Eine bevorzugte Ausführungsform der Formulierung enthält mindestens eine Komponente mit mindestens einer isocyanatreaktiven Gruppe, wobei das molare Verhältnis der Isocyanatgruppen der Komponente b. zu der Summe aller isocyanatreaktiven Gruppen in der Formulierung mindestens 6:1, oder bevorzugt mindestens 8:1, oder bevorzugt mindestens 11:1, oder bevorzugt mindestens 15:1, oder bevorzugt mindestens 20:1, oder bevorzugt mindestens 50:1, oder bevorzugt mindestens 100:1 beträgt.

In einer bevorzugten Ausführungsform der Formulierung enthält die Formulierung
a. 0,01 bis 45 Gew.-%, bevorzugt 0,1 bis 15 Gew.-%, oder bevorzugt 0,1 bis 10 Gew.-%, oder bevorzugt 0,2 bis 8 Gew.-%, oder bevorzugt 0,5 bis 5 Gew.-% des mindestens einen Pigments;
b. 1 bis 99 Gew.-%, bevorzugt 5 bis 95 Gew.-%, oder bevorzugt 10 bis 93 Gew.-%, oder bevorzugt 20 bis 93 Gew.-%, oder bevorzugt 40 bis 93 Gew.-% der mindestens einen Isocyanatgruppen-haltigen Komponente;
c. 0,01 bis 20 Gew.-%, bevorzugt 0,05 bis 15 Gew.-%, oder bevorzugt 0,1 bis 10 Gew.-% des mindestens einen Netzmittels und/oder Dispergiermittels;
d. 0,1 bis 30 Gew.-%, bevorzugt 0,5 bis 25 Gew.-%, oder bevorzugt 1 bis 15 Gew.-% des mindestens einen Anreibeharz;
e. 0 bis 80 Gew.-%, bevorzugt 0 bis 75 Gew.-%, oder bevorzugt 0 bis 50 Gew.-%, oder bevorzugt 0 bis 20 Gew.-%, oder bevorzugt 0 bis 10 Gew.-%, oder bevorzugt 0,1 bis 30 Gew.-% Lösemittel;
jeweils bezogen auf die Gesamtmenge der Formulierung, wobei die Summe aller Bestandteile der Formulierung 100 Gew.-% nicht übersteigt.

Bevorzugt beinhaltet die Formulierung
a. 0,5 bis 5 Gew.-% des mindestens einen Pigments;
b. 40 bis 93 Gew.-% der mindestens einen Isocyanatgruppen-haltigen Komponente;
c. 0,1 bis 10 Gew.-% des mindestens einen Netzmittels und/oder Dispergiermittels;
d. 1 bis 15 Gew.-% des mindestens einen Anreibeharz;
e. 0 bis 30 Gew.-% Lösemittel,
jeweils bezogen auf die Gesamtmenge der Formulierung, wobei die Summe aller Bestandteile der Formulierung 100 Gew.-% nicht übersteigt, wobei das molare Verhältnis der Isocyanatgruppen der Komponente b. zu der Summe aller isocyanatreaktiven Gruppen in der Formulierung mindestens 6:1, oder bevorzugt mindestens 8:1, mehr bevorzugt mindestens 11:1, besonders bevorzugt mindestens 20:1 beträgt.

Stabile, insbesondere lagerstabile Isocyanatgruppen-haltige Formulierungen zeichnen sich bevorzugt dadurch aus, dass die Viskosität während einer mindestens 3-tägigen, oder bevorzugt mindestens 5-tägigen, oder bevorzugt von mindestens 7-tägigen, oder bevorzugt von mindestens 10-tägigen, oder bevorzugt von mindestens 14-tägigen Lagerung bei 50 °C lediglich einen Viskositätsanstieg von ≤ 500 %, bevorzugt von ≤ 300 %, oder bevorzugt von ≤ 200 %, oder bevorzugt von ≤ 100 %, oder bevorzugt von ≤ 50 % aufweisen. Insbesondere bevorzugt ist der Anstieg der Viskosität während einer 3-tägigen Lagerung bei 50 °C der Formulierung ≤ 100 %, bezogen auf die Ausgangsviskosität. Weiterhin bevorzugt beträgt der Anstieg der Teilchengröße in der Isocyanatgruppen-haltige Formulierung, gemessen mit dynamischer Lichtstreuung nach Redispergierung von gegebenenfalls gebildeten weichen Sedimenten, bezogen auf Z-Average, maximal 500 %, bevorzugt maximal 200 %, bevorzugt maximal 100 %, bevorzugt maximal 50 % . Unter weichen Sedimenten wird verstanden, dass sich die Sedimente durch Schütteln redispergieren. Das Z-Average ist das gemessene intensitätsgewichtete harmonische Mittel des hydrodynamischen Durchmessers der Teilchen.

Weiterhin bevorzugt weist die Formulierung zum Zeitpunkt der Bestimmung der Ausgangsviskosität oder nach ihrer Lagerung von mindestens 3 Tagen, oder bevorzugt von mindestens 10 Tagen, oder bevorzugt von mindestens 14 Tagen einen Gehalt an Isocyanatgruppen in einem Bereich von 2 bis 60 Gew.-%, oder bevorzugt in einem Bereich von 3 bis 50 Gew.-%, oder bevorzugt in einem Bereich von 4 bis 35 Gew.-%, oder bevorzugt in einem Bereich von 5 bis 20 Gew.-%, bezogen auf die Gesamtmenge der Formulierung.

Es ist bevorzugt, dass die Isocyanatgruppen-haltige Formulierung bevorzugt keine harten Sedimente beinhaltet. Unter harten Sedimenten wird verstanden, dass sich die Sedimente durch Schütteln nicht redispergieren lassen. Unter Schütteln wird bevorzugt ein Schütteln per Hand oder mittels üblicher Labor-Schüttelmaschinen verstanden. Als üblicher Laborschüttler kann ein IKA^{®} VORTEX 2 bei einer Drehzahl von 2000 rpm eingesetzt werden, wobei die Schüttelzeit bevorzugt in einem Bereich von 10 bis 60 Sekunden, oder bevorzugt in einem Bereich von 15 bis 40 Sekunden liegt.

### Pigmente

Als Pigmente können alle Pigmente verwendet werden, die der Fachmann für eine stabile Formulierung verwenden würde. Pigmente, die als Komponente a. bevorzugt Einsatz finden, können in mehrere Klassen unterteilt werden: organische oder anorganische Pigmente, die als Festkörperdispersion in Form von Teilchen, wenn nötig mit Hilfe eines geeigneten Netz- und/oder Dispergiermittels, dispergiert vorliegen. Die Pigmente werden entweder einzeln eingesetzt oder als eine Mischung aus mindestens zwei hiervon.

Das mindestens eine Pigment kann aus einer großen Vielzahl an Pigmentklassen ausgewählt werden. Wenn die Applikation Drucktechniken, insbesondere dem Inkjet-Druck entspricht, sind Pigmentteilchen mit einem Durchmesser kleiner oder gleich 100 µm, bevorzugt kleiner oder gleich 10 µm oder bevorzugt kleiner oder gleich 5 µm vorteilhaft.

Bevorzugt ist das Pigment homogen in der Formulierung verteilt. Unter homogen wird verstanden, dass der Prozentuale Anteil des Pigments in der Formulierung an unterschiedlichen Stellen nicht mehr als 10 Gew-%, bevorzugt nicht mehr als 5 Gew.-%, besonders bevorzugt nicht mehr als 1 Gew.-% von dem gemittelten Anteil an Pigment in der Formulierung abweicht.

Beispiele für geeignete organische Pigmente sind:
- Monoazopigmente:
   C.I. Pigment Brown 25;C.I. Pigment Orange 5, 13, 36 und 67;
   C.I. Pigment Red 1, 2, 3, 5, 8, 9, 12, 17, 22, 23, 31, 48 : 1, 48 : 2, 48 : 3, 48 : 4, 49, 49 : 1, 52 : 1, 52 : 2, 53, 53 : 1, 53 : 3, 57 : 1, 251, 112, 146, 170, 184, 210 und 245;
   C.I. Pigment Yellow 1, 3, 73, 74, 65, 97, 151 und 183;
- Naphthol AS Pigmente:
   C.I. Pigment Brown 1;
   C.I. Pigment Orange 22, 24, 38;
   C.I. Pigment Red 2, 5, 7, 8, 9, 10, 11, 12, 13, 14, 15, 16, 17, 18, 21, 22, 23, 31, 32, 95, 112, 114, 119, 136, 146,147, 148, 150, 151, 164, 170, 184, 187, 188, 210, 212, 213, 222, 223, 237, 239, 240, 243, 245, 247, 253, 256, 258, 261, 266, 267, 268, 269;
   C.I. Pigment Violet 13, 25, 44, 50;
- Disazopigmente:
   C.I. Pigment Brown 23;
   C.I. Pigment Orange 15, 16, 34 und 44;
   C.I. Pigment Red 144, 166, 214, 220, 221 242 und 248;
   C.I. Pigment Yellow 12, 13, 14, 16, 17, 55, 63, 81, 83, 87, 90, 106, 113, 114, 121, 126, 127, 152, 155, 170, 171, 172, 174, 176 und 188;
- Benzimidazolonpigmente:
   C.I. Pigment Brown 25
   C.I. Orange 36, 60, 62, 72
   C.I. Pigment Red 171, 175, 176, 185, 208
   C.I. Yellow 120, 151, 154, 175, 180, 181, 194
   C.I. Violet 32;
- Anthanthronpigmente:
   C.I. Pigment Orange 77;
   C.I. Pigment Red 168 (C.I. Vat Orange 3);
- Anthrachinonpigmente:
   C.I. Pigment Yellow 147, 193, 199, und 202;;
   C.I. Pigment Violet 31;
- Anthrapyrimidinpigmente:
   C.I. Pigment Yellow 108 (C.I. Vat Yellow 20);
- Chinacridonpigmente:
   C.I. Pigment Red 122, 202 und 206;
   C.I. Pigment Violet 19;
- Chinophthalonpigmente:
   C.I. Pigment Yellow 138;
- Diketopyrrolopyrrol-Pigmente
   C.I. Pigment Orange 71 und 73;
   C.I. Pigment Red 254, 255,264, und 272
- Dioxazinpigmente:
   C.I. Pigment Violet 23 und 37;
- Flavanthronpigmente:
   C.I. Pigment Yellow 24 (C.I. Vat Yellow 1);
- Indanthronpigmente:
   C.I. Pigment Blue 60 (C.I. Vat Blue 4) und 64 (C.I. Vat Blue 6);
- Isoindolinpigmente:
   C.I. Pigment Brown 38;
   C.I. Pigment Orange 66 und 69;
   C.I. Pigment Red 260;
   C.I. Pigment Yellow 139 und 185;
- Isoindolinonpigmente:
   C.I. Pigment Orange 61;
   C.I. Pigment Red 257 und 260;
   C.I. Pigment Yellow 109, 110, 173 und 185;
- Isoviolanthronpigmente:
   C.I. Pigment Violet 31 (C.I. Vat Violet 1);
- Metallkomplexpigmente:
   C.I. Pigment Green 8 und 10;
   C.I. Pigment Red 257
   C.I. Pigment Yellow 117, 129, 150 und 153;
- Perinonpigmente:
   C.I. Pigment Orange 43 (C.I. Vat Orange 7);
   C.I. Pigment Red 194 (C.I. Vat Red 15);
- Perylenpigmente:
   C.I. Pigment Black 31 und 32;
   C.I. Pigment Red 123, 149, 178, 179 (C.I. Vat Red 23), 190 (C.I. Vat Red 29) und 224;
   C.I. Pigment Violet 29;
- Phthalocyaninpigmente:
   C.I. Pigment Blue 15, 15 : 1, 15 : 2, 15 : 3, 15 : 4, 15 : 6 und 16;
   C.I. Pigment Green 7 und 36;
- Pyranthronpigmente:
   C.I. Pigment Orange 40 und 51;
   C.I. Pigment Red 216 (C.I. Vat Orange 4), 226;
- Thioindigopigmente:
   C.I. Pigment Red 88 und 181 (C.I. Vat Red 1);
   C.I. Pigment Violet 38 (C.I. Vat Violet 3);
- Triarylcarboniumpigmente:
   C.I. Pigment Blue 1, 2, 9, 10, 14, 61 und 62;
   C.I. Pigment Green 1 und 4;
   C.I. Pigment Red 81, 81 : 1 und 169;
   C.I. Pigment Violet 1, 2, 3, 27 und 39;
   C.I. Pigment Black 1 (Anilinschwarz);
   C.I. Pigment Yellow 101 (Aldazingelb);
   C.I. Pigment Brown 22;

Das mindestens eine Pigment ist bevorzugt ausgewählt aus der Gruppe bestehend aus P.B. 15:4 (z.B. Hostaperm^{®} Blue BT-617-D), P.V. 19 (z.B. Inkjet Magenta 5EB02), P.Y. 155 (z.B. Inkjet Yellow 4GC) oder einer Mischung aus mindestens zwei hiervon.

Beispiele für geeignete anorganische Pigmente:
- Weißpigmente:
   Titandioxid (C.I. Pigment White 6), Zinkweiß, Farbenzinkoxid; Zinksulfid, Lithopone; Bleiweiß;
- Schwarzpigmente:
   Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente:
   Chromoxid, Chromoxidhydratgrün; Chromgrün (C.I. Pigment Green 48); Cobaltgrün (C.I. Pigment Green 50); Ultramaringrün;
   Kobaltblau (C.I. Pigment Blue 28 und 36); Ultramarinblau; Eisenblau (C.I. Pigment Blue 27); Manganblau;
   Ultramarinviolett; Kobalt- und Manganviolett;
   Eisenoxidrot (C.I. Pigment Red 101); Cadmiumsulfoselenid (C.I. Pigment Red 108); Molybdatrot (C.I. Pigment Red 104); Ultramarinrot;
   Eisenoxidbraun, Mischbraun, Spinell- und Korundphasen (C.I. Pigment Brown 24, 29 und 31), Chromorange;
   Eisenoxidgelb (C.I. Pigment Yellow 42); Nickeltitangelb (C.I. Pigment Yellow 53; C.I. Pigment Yellow 157 und 164); Chrom titangelb; Cadmiumsulfid und Cadmiumzink sulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
- Interferenzpigmente:
   Metalleffektpigmente auf der Basis beschichteter Metallplättchen; Perlglanzpigmente auf der Basis metalloxidbeschichteter Glimmerplättchen; Flüssigkristallpigmente.

Das mindestens eine Pigment ist bevorzugt ausgewählt aus der Gruppe bestehend aus P.W. 6 (z.B. Kronos^{®} 2310), Pigment Black 6 oder 7 (z.B. NIPex^{®} 35) oder einer Mischung hieraus.

Die Isocyanatgruppen-haltige Komponente b. kann jede Komponente sein, die wenigstens eine Isocyanatgruppe beinhaltet und vom Fachmann für die lagerstabile Formulierung ausgewählt würde. Bevorzugt beinhaltet die Komponente b. ein Polyisocyanat.

Der Begriff "Polyisocyanat", wie hier verwendet, ist eine Sammelbezeichnung für Verbindungen, die im Molekül zwei oder mehrere Isocyanat-Gruppen -N=C=O enthalten. Bevorzugte Vertreter dieser Polyisocyanate sind die Diisocyanate. Diese haben die allgemeinen Struktur O=C=N-R-N=C=O, wobei R üblicherweise für aliphatische, alicyclische, araliphatische und/oder aromatische Reste steht.

Wenn hier allgemein von "Isocyanaten" die Rede ist, so sind damit sowohl Monoisocyanate als auch monomere und/oder oligomere Polyisocyanate gleichermaßen gemeint. Zum Verständnis vieler Aspekte ist es jedoch wichtig, zwischen monomeren Diisocyanaten und oligomeren Polyisocyanaten zu unterscheiden. Wenn hier von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen darstellen oder enthalten.

Bevorzugt weist wenigstens eines der in der Isocyanatgruppen-haltigen Komponente b. enthaltenen monomeren oder oligomeren Polyisocyanate eine (mittlere) NCO-Funktionalität von 2,0 bis 6,0, oder bevorzugt von 2,3 bis 4,5 auf.

Als in der Isocyanatkomponente einzusetzende monomere Polyisocyanate sind bevorzugt solche monomeren Polyisocyanate mit einem Molekulargewicht im Bereich von 140 bis 400 g/mol geeignet, die aliphatisch, cycloaliphatisch, araliphatisch und/oder aromatisch gebundene Isocyanatgruppen enthalten. Diese Polyisocyanate sind auf verschiedene Weise, beispielsweise durch Phosgenierung in der Flüssig- oder Gasphase oder auf phosgenfreien Weg, wie z.B. durch thermische Urethanspaltung erhältlich.

Bevorzugte monomere Isocyanate mit aliphatisch gebundenen Isocyanatgruppen sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan und 1,10-Diisocyanatodecan.

In einer bevorzugten Ausführungsform der Formulierung ist die Isocyanatgruppen-haltige Komponente b. ausgewählt aus der Gruppe bestehend aus bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan und 1,10-Diisocyanatodecan, 1,3- und 1,4-Bis-(isocyanatomethyl)benzol (Xyxlylendiisocyanat; XDI), 1,3- und 1,4-Bis(1-isocyanato-1-methyl-ethyl)-benzol (TMXDI), 2,4- und 2,6-Diisocyanatotoluol (TDI), 2,4'- und 4,4'-Diisocyanatodiphenylmethan (MDI) und 1,5-Diisocyanatonaphthalin 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI) oder einer Mischung aus mindestens zwei hiervon, sowie gegebenenfalls Oligomere und Reaktionsprodukte hiervon.

Bevorzugt beinhaltet die Isocyanatgruppen-haltige Komponente b. monomere Isocyanate mit cycloaliphatisch gebundenen Isocyanatgruppen ausgewählt aus der Gruppe bestehend aus 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan.

Bevorzugte monomere Isocyanate mit araliphatisch gebundenen Isocyanatgruppen sind 1,3- und 1,4-Bis-(iso¬cyanatomethyl)benzol (Xyxlylendiisocyanat; XDI), 1,3- und 1,4-Bis(1-isocyanato-1-methyl¬ethyl)-benzol (TMXDI).

Bevorzugte monomere Isocyanate mit aromatisch gebundenen Isocyanatgruppen sind 2,4- und 2,6-Diisocyanatotoluol (TDI), 2,4'- und 4,4'-Diisocyanatodiphenylmethan (MDI) und 1,5-Diisocyanatonaphthalin.

Weitere ebenfalls geeignete Diisocyanate finden sich darüber hinaus beispielsweise in Justus Liebigs Annalen der Chemie Band 562 (1949) S. 75 - 136.

Bevorzugt enthält die Isocyanatgruppen-haltige Komponente b. mindestens 40 Gew.-%, bevorzugt mindestens 50% Gew.-%, oder bevorzugt mindestens 60 Gew.-%, oder bevorzugt mindestens 70 Gew.-%, oder bevorzugt mindestens 80 Gew.-%, oder bevorzugt mindestens 90 Gew.-% an aliphatischen oder cyclo-aliphatischen Isocyanaten, bezogen auf die Gesamtmenge der Isocyanatgruppen-haltigen Komponente b..

In einer bevorzugten Ausführungsform beinhaltet die Isocyanatgruppen-haltige Komponente b. besteht die Isocyanatgruppen-haltige Komponente b. aus aliphatischen oder cyclo-aliphatischen Isocyanaten.

Bevorzugt kann als Isocyanatgruppen-haltige Komponente b. mindestens ein Polyisocyanat eingesetzt werden. Bevorzugt einsetzbare oligomere Polyisocyanate sind aus den oben beschriebenen monomeren Polyisocyanaten durch den im folgenden Abschnitt beschriebenen Vorgang der "Modifizierung" monomerer Polyisocyanate erhältlich. Hierbei können oligomere Polyisocyanate durch Modifizierung einzelner der oben genannten monomeren Polyisocyanate erhalten werden. Es ist aber auch möglich, Gemische von wenigstens zwei der oben genannten monomeren Polyisocyanate zu modifizieren, so dass oligomere Polyisocyanate erhalten werden, die aus wenigstens zwei unterschiedlichen Monomeren aufgebaut sind.

Die Herstellung oligomerer Polyisocyanate aus monomeren Diisocyanaten wird hier auch als Modifizierung monomerer Diisocyanate bezeichnet. Diese "Modifizierung", wie hier verwendet, bedeutet dabei die Reaktion monomerer Diisocyanate zu oligomeren Polyisocyanaten mit Uretdion-, Isocyanurat-, Allophanat-, Biuret-, Iminooxadiazindion- und/oder Oxadiazintrionstruktur.

So ist z.B. Hexamethylendiisocyanat (HDI) ein "monomeres Diisocyanat", da es zwei Isocyanat-Gruppen enthält und kein Reaktionsprodukt aus mindestens zwei Polyisocyanatmolekülen darstellt:

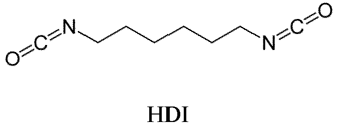

Reaktionsprodukte aus mindestens zwei HDI-Molekülen, die immer noch über mindestens zwei Isocyanat-Gruppen verfügen, sind demgegenüber "oligomere Polyisocyanate" im Sinne der Erfindung. Vertreter solcher "oligomerer Polyisocyanate" sind ausgehend von dem monomeren HDI z.B. das HDI-Isocyanurat und das HDI-Biuret, die jeweils aus drei monomeren HDI Bausteinen aufgebaut sind:

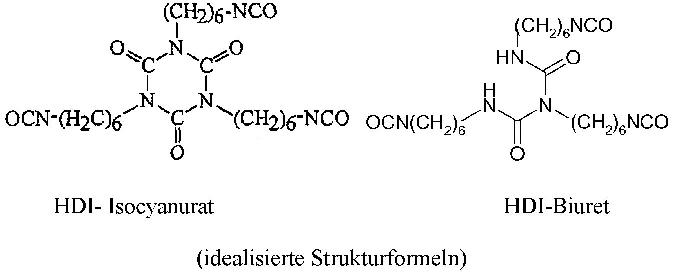

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Gemäß einer Ausführungsform der Erfindung weisen die oligomeren Polyisocyanate mindestens eine der folgenden oligomeren Strukturtypen oder deren Gemische auf:

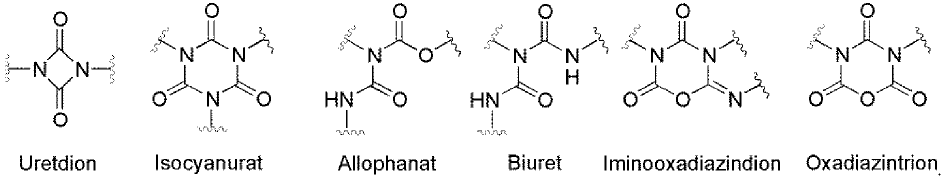

Vorteilhaft ist es oligomere Polyisocyanate einzusetzen, die eine Mischung aus mindestens zwei oligomeren Polyisocyanaten darstellen, wobei sich die mindestens zwei oligomere Polyisocyanate in ihrer Struktur unterscheiden. Diese ist vorzugsweise ausgewählt aus der Gruppe bestehend aus Uretdion-, Isocyanurat-, Allophanat-, Biuret-, Iminooxadiazindion- und Oxadiazintrionstruktur und deren Mischungen. Derartige Ausgangsmischungen können insbesondere im Vergleich zu Vernetzungsreaktionen mit oligomeren Polyisocyanaten nur einer definierten Struktur zu einer Beeinflussung des Tg-Wertes führen, was für viele Anwendungen vorteilhaft ist.

Bevorzugt wird im erfindungsgemäßen Verfahren eine Isocyanatgruppen-haltigen Komponente b. eingesetzt, die mindestens ein oligomeres Polyisocyanat mit Biuret-, Allophanat-, Isocyanurat-, und/oder Iminooxadiazindionstruktur und Mischungen davon enthält.

Bevorzugt handelt es sich bei einem in der Isocyanatgruppen-haltigen Komponente b. enthaltenen oligomeren Polyisocyanat um eine solches, das nur eine einzelne definierte oligomere Struktur, beispielsweise ausschließlich oder größtenteils Isocyanuratstruktur, enthält. In der Regel liegen in den erfindungsgemäß verwendeten oligomeren Polyisocyanaten herstellungsbedingt aber immer mehrere unterschiedliche oligomere Strukturen nebeneinander vor.

Im Rahmen der vorliegenden Erfindung wird oligomeres Polyisocyanat als aus einer einzelnen definierten oligomeren Struktur aufgebaut angesehen, wenn eine oligomere Struktur ausgewählt aus Uretdion-, Isocyanurat-, Allophanat-, Biuret-, Iminooxadiazindion- und/oder Oxadiazintrionstruktur zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Isocyanurat-, Allophanat-, Biuret-, Iminooxadiazindion- und Oxadiazintrionstruktur in dem oligomeren Polyisocyanat, vorliegt.

Bevorzugt wird ein oligomeres Polyisocyanat einer einzelnen definierten oligomeren Struktur eingesetzt, wobei die oligomere Struktur aus Uretdion-, Isocyanurat-, Allophanat-, Biuret-, Iminooxadiazindion- und/oder Oxadiazintrionstruktur ausgewählt ist und zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Isocyanurat-, Allophanat-, Biuret-, Iminooxadiazindion- und Oxadiazintrionstruktur im oligomeren Polyisocyanat, vorliegt.

Bevorzugt handelt es sich bei den oligomeren Polyisocyanaten um solche, die hauptsächlich Isocyanuratstruktur aufweisen, und die oben genannten Uretdion-, Allophanat-, Biuret-, Iminooxadiazindion- und/oder Oxadiazintrionstruktur lediglich als Nebenprodukte enthalten dürfen. So sieht eine Ausführungsform der Erfindung den Einsatz eines oligomeren Polyisocyanats einer einzelnen definierten oligomeren Struktur vor, wobei die oligomere Struktur eine Isocyanuratstruktur ist und zu mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Isocyanurat-, Allophanat-, Biuret-, Iminooxadiazindion- und Oxadiazintrionstruktur im Polyisocyanat, vorliegt.

Es ist weiterhin möglich oligomere Polyisocyanate einzusetzen, die weitestgehend keine Isocyanuratstruktur aufweisen, und hauptsächlich mindestens einen der oben genannten Uretdion-, Allophanat-, Biuret-, Iminooxadiazindion- und/oder Oxadiazintrion-Strukturtypen enthalten. Gemäß einer besonderen Ausführungsform der Erfindung besteht das eingesetzte oligomere Polyisocyanat mindestens 50 mol-%, vorzugsweise 60 mol-%, bevorzugt 70 mol-%, besonders bevorzugt 80 mol-%, insbesondere 90 mol-%, jeweils bezogen auf die Summe der vorliegenden oligomeren Strukturen aus der Gruppe, bestehend aus Uretdion-, Isocyanurat-, Allophanat-, Biuret, Iminooxadiazindion- und Oxadiazintrionstruktur im Polyisocyanat, aus oligomeren Polyisocyanaten, die einen Strukturtyp ausgewählt aus der Gruppe bestehend aus Uretdion-, Allophanat-, Biuret-, Iminooxadiazindion- und/oder Oxadiazintrionstruktur aufweisen.

Bevorzugt ist der Einsatz eines isocyanuratarmen Polyisocyanats, welches, bezogen auf die Summe der vorliegenden oligomeren Strukturen aus der Gruppe, bestehend aus Uretdion-, Isocyanurat-, Allophanat-, Biuret, Iminooxadiazindion- und Oxadiazintrionstruktur im Polyisocyanat, höchstens als 50 mol-%, vorzugsweise höchstens als 40 mol-%, bevorzugt höchstens als 30 mol-%, besonders bevorzugt höchstens als 20 mol-%, 10 mol-% oder 5 mol-% Isocyanuratstrukturen aufweist.

Bevorzugt ist der Einsatz eines oligomeren Polyisocyanats eines einzelnen definierten oligomeren Strukturtyps vor, wobei der oligomere Strukturtyp ausgewählt ist aus der Gruppe bestehend aus Uretdion-, Allophanat-, Biuret-, Iminooxadiazindion- und/oder Oxadiazintrionstruktur und dieser Strukturtyp zu mindestens 50 mol-%, vorzugsweise 60 mol-%, bevorzugt 70 mol-%, besonders bevorzugt 80 mol-%, insbesondere 90 mol-% , bezogen auf die Summe der vorliegenden oligomeren Strukturen aus der Gruppe, bestehend aus Uretdion-, Isocyanurat-, Allophanat-, Biuret, Iminooxadiazindion- und Oxadiazintrionstruktur im Polyisocyanat, vorliegt.

Die Anteile an Uretdion-, Isocyanurat-, Allophanat-, Biuret-, Iminooxadiazindion- und/oder Oxadiazintrionstruktur in der Isocyanatgruppen-haltigen Komponente b. können z.B. durch NMR-Spektroskopie bestimmt werden. Bevorzugt lässt sich hierbei die 13C-NMR-Spektroskopie, vorzugsweise protonenentkoppelt, einsetzen, da die genannten oligomeren Strukturen charakteristische Signale liefern.

Herstellverfahren für die in der Isocyanatgruppen-haltigen Komponente b. bevorzugt einzusetzenden oligomeren Polyisocyanate mit Uretdion-, Isocyanurat-, Allophanat-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 und EP-A 0 798 299 beschrieben.

Bevorzugt ist ein einsetzbares oligomeres Polyisocyanat dadurch definiert, dass es oligomere Polyisocyanate enthält, die aus monomeren Diisocyanaten unabhängig von der Art der verwendeten Modifizierungsreaktion unter Einhaltung eines Oligomerisierungsgrades von 5 bis 45 %, vorzugsweise 10 bis 40 %, besonders bevorzugt 15 bis 30 %, erhalten wurde. Unter "Oligomerisierungsgrad" ist dabei der Prozentsatz der in der Ausgangsmischung ursprünglich vorhandenen Isocyanatgruppen zu verstehen, der während des Herstellprozesses unter Bildung von Uretdion-, Isocyanurat-, Allophanat-, Biuret-, Iminooxadiazindion- und/oder Oxadiazintrionstrukturen verbraucht wird.

Bevorzugt ist der Einsatz eines isocyanat-terminierte Prepolymere als oligomeres Polyisocyanat. Diese Präpolymere sind dem Fachmann bekannt und können durch Umsetzung eines Überschusses eines geeigneten monomeren Isocyanats, wie zuvor beschrieben, mit einer geeigneten isocyanat-reaktive Gruppen tragenden Verbindung erhalten werden.

Als isocyanat-reaktive Gruppen werden im Rahmen der vorliegenden Erfindung Amin-, Amid-, Urethan-, Alkohol-, Thiol-, Epoxid-, Carbonsäure-, Carbonsäureanhydrid-Gruppen oder Gruppen verstanden, die Zerewitinoff-aktiven Wasserstoff enthalten. Zur Definition von Zerewitinoff-aktivem Wasserstoff wird auf Römpp Chemie Lexikon, Georg Thieme Verlag Stuttgart verwiesen. Bevorzugt werden unter isocyanat-reaktiven Gruppen OH, NH und/oder SH verstanden.

Beispiele für Verbindung mit isocyanat-reaktiven Gruppen sind ein- zwei, und mehrwertige Alkohole mit primären, sekundären und tertiären OH-Gruppen, analoge Thiole, Polyole, z.B. Polyether-, Polyester-, Polyacrylat-, Polycarbonatpolyole, analoge Polythiole, schwefelhaltige Hydroxyverbindungen, Amine (z.B. primär, sekundär, aliphatisch, cycloaliphatisch, aromatisch, sterisch gehindert), Polyamine und Asparaginsäure Ester.

Alkohole können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit), aber auch höhermolekulare Polyhydroxyverbindungen wie Polyetherpolyole, Polyesterpolyole, Polycarbonatpolyole, Polysiloxanpolyole, sowie Polybutadienpolyole sein.

Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Bernsteinsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-butylperoxid.

Amine können beliebige ein- oder mehrwertige Amine, wie z. B. Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine, Aminomethylcyclohexan, Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin, Dicyclohexylamin, Hydrazin, Ethylendiamin, 1,2-Diaminopropan, 1,4-Diaminobutan, 2-Methyl-pentamethylendiamin, 1,6-Diaminohexan, 2,2,4- bzw. 2,4,4-Trimethylhexamethylendiamin, 1,2-Diaminocyclohexan, 1-Amino-3,3,5-trimethyl-5-aminomethylcyclohexan (Isophorondiamin, IPDA), 4,4'-Diaminodicyclohexyl-methan, Pyrrolidin, Piperidin, Piperazin, (3-Aminopropyl)-trimethoxysilan, (3-Aminopropyl)-triethoxysilan und (3-Methylamino)propyl-trimethoxysilan, Aminoalkohole, wie z. B. 2-Aminoethanol, 2-Methylaminoethanol, 2-(Dimethylamino)-ethanol, 2-(Diethylamino)-ethanol, 2-(Dibutyl-amino)-ethanol, Diethanolamin, N-Methyl-diethanolamin, Triethanolamin, 3-Amino-1-propanol, 3-Dimethylamino-1-propanol, 1-Amino-2-propanol, 1-Dimethylamino-2-propanol, 1-Diethylamino-2-propanol, Bis-(2-hydroxypropyl)-amin, Bis-(2-hydroxypropyl)-methylamin, 2-(Hydroxyethyl)-bis-(2-hydroxypropyl)-amin, Tris-(2-hydroxypropyl)-amin, 4-Amino-2-butanol, 2-Amino-2-methylpropanol, 2-Amino-2-methyl-1,3-propandiol, 2-Amino-2-hydroxypropyl-1,3-propandiol und N-(2-Hydroxyethyl)-piperidin, Etheramine, wie z. B. 2-Methoxyethylamin, 3-Methoxypropylamin, 2-(2-Dimethylaminoethoxy)-ethanol und 1,4-Bis-(3-aminopropoxy)-butan oder aromatische Di- und Triamine mit wenigstens einem Alkylsubstituenten mit 1 bis 3 Kohlenstoffatomen am aromatischen Ring, wie z. B. 2,4-Toluylendiamin, 2,6-Toluylendiamin, 1-Methyl-3,5-diethyl-2,4-diaminobenzol, 1,3-Diethyl,2,4-diaminobenzol, 1-Methyl-3,5-diethyl-2,6-diaminobenzol, 1,3,5-Triethyl-2,6-diaminobenzol, 3,5,3',5'-tetraethyl-4,4'-diaminodiphenylmethan, 3,3'-Dimethyl-4,4'-diaminodiphenylmethan, 1-Ethyl-2,4-diaminobenzol, 1-Ethyl-2,6-diaminobenzol, 2,6-Diethylnaphthylen-1,5-diamin, 4,4'-Methylenebis-(2,6-Diisopropylaniline) sein.

Des Weiteren können auch Polyamine, wie z. B. die aus EP-B 0 403 921 bekannten Polyasparaginsäurederivate, oder auch solche Polyamine, deren Aminogruppen in blockierter Form vorliegen, wie z. B. Polyketimine, Polyaldimine oder Oxazolane, verwendet werden. Aus diesen blockierten Aminogruppen entstehen unter Feuchtigkeitseinfluss freie Aminogruppen und im Falle der Oxazolane auch freie Hydroxylgruppen, die unter Vernetzung mit Isocyanatgruppen abreagieren können.

Geeignete aminofunktionelle Komponenten sind insbesondere Polyasparaginsäureester, wie sie beispielsweise nach dem Verfahren der EP-B 0 403 921 durch Umsetzung von Diaminen mit Fumarsäure- bzw. Maleinsäureestern erhältlich sind.

Bevorzugte aminofunktionelle Verbindungen sind Polyetherpolyamine mit 2 bis 4, vorzugsweise 2 bis 3 und besonders bevorzugt 2 aliphatisch gebundenen primären Aminogruppen und einem zahlenmittleren Molekulargewicht Mn von 148 bis 12200, vorzugsweise 148 bis 8200, besonders bevorzugt 148 bis 4000 und ganz besonders bevorzugt 148 bis 2000 g/mol. Besonders geeignete Thiole sind Verbindungen, welche mindestens zwei Thiolgruppen pro Molekül aufweisen.

Bevorzugte Polythiole werden beispielsweise ausgewählt aus der Gruppe, bestehend aus einfachen Alkanthiolen, wie z. B. Methandithiol, 1,2-Ethandithiol, 1,1-Propandithiol, 1,2-Propandithiol, 1,3-Propandithiol, 2,2-Propandithiol, 1,4-Butandithiol, 2,3-Butandithiol, 1,5-Pentandithiol, 1,6-Hexandithiol, 1,2,3-Propantrithiol, 1,1-Cyclohexandithiol, 1,2-Cyclohexandithiol, 2,2-Dimethylpropan-1,3-dithiol, 3,4-Dimethoxybutan-1,2-dithiol oder 2-Methylcyclohexan-2,3-dithiol, Thioethergruppen enthaltenden Polythiolen, wie z. B. 2,4-Dimercaptomethyl-1,5-dimercapto-3-thiapentan, 4-Mercaptomethyl-1,8-dimercapto-3,6-dithiaoctan, 4,8-Dimercaptomethyl-1,11-dimercapto-3,6,9-trithiaundecan, 4,7-Dimercaptomethyl-1,11-dimer-capto-3,6,9-trithiaundecan, 5,7-Dimercaptomethyl-1,11-dimercapto-3,6,9-trithiaundecan, 5,6-Bis-(mercaptoethylthio)-1,10-di-mercapto-3,8-dithiadecan, 4,5-Bis-(mercaptoethylthio)-1,10-dimercapto-3,8-dithiadecan, Tetrakis-(mercaptomethyl)methan, 1,1,3,3-Tetrakis(mercaptomethylthio)propan, 1,1,5,5-Tetrakis(mercapto-methylthio)-3-thiapentan, 1,1,6,6-Tetrakis(mercaptomethylthio)-3,4-dithiahexan, 2-Mercaptoethylthio-1,3-dimercaptopropan, 2,3-Bis(mercaptoethylthio)-1-mercaptopropan, 2,2-Bis(mercaptomethyl)-1,3-dimercaptopropan, Bis-(mercaptomethyl)sulfid, Bis(mercaptomethyl)disulfid, Bis(mercaptoethyl)-sulfid, Bis(mercapto-ethyl)disulfid, Bis(mercaptopropyl)sulfid, Bis(mercaptopropyl)disulfid, Bis(mercaptomethyl-thio)methan, Tris(mercaptomethylthio)methan, Bis(mercaptoethylthio)methan, Tris(mercapto-ethylthio)methan, Bis(mercaptopropylthio)methan, 1,2-Bis(mercaptomethylthio)ethan, 1,2-Bis-(mercaptoethylthio)ethan, 2-Mercaptoethylthio)ethan, 1,3-Bis(mercaptomethylthio)propan, 1,3-Bis(mercaptopropylthio)propan, 1,2,3-Tris(mercaptomethylthio)propan, 1,2,3-Tris(mercapto-ethylthio)propan, 1,2,3-Tris(mercaptopropylthio)propan, Tetrakis(mercaptomethylthio)methan, Tetrakis(mercaptoethylthiomethyl)methan, Tetrakis(mercaptopropylthiomethyl)methan, 2,5-Dimercapto-1,4-dithian, 2,5-Bis(mercaptomethyl)-1,4-dithian und dessen gemäß JP-A 07118263 erhältliche Oligomere, 1,5-Bis(mercaptopropyl)-1,4-dithian, 1,5-Bis(2-mercaptoethylthiomethyl)-1,4-dithian, 2-Mercaptomethyl-6-mercapto-1,4-dithiacycloheptan, 2,4,6-Trimercapto-1,3,5-trithian, 2,4,6-Trimercaptomethyl-1,3,5-trithian oder 2-(3-Bis(mercaptomethyl)-2-thiapropyl)-1,3-dithiolan, Polyesterthiolen, wie z. B. Ethylenglycol-bis(2-mercaptoacetat), Ethylenglycol-bis(3-mercaptopropionat), Diethylenglycol(2-mercaptoacetat), Diethylenglycol(3-mercaptopropionat), 2,3-Dimercapto-1-propanol(3-mercaptopropionat), 3-Mercapto-1,2-propandiol-bis(2-mercapto-acetat), 3-Mercapto-1,2-propandiol-bis(3-mercaptopropionat), Trimethylolpropan-tris(2-mercapto-acetat), Trimethylolpropan-tris(3-mercaptopropionat), Trimethylolethan-tris(2-mercaptoacetat), Trimethylolethan-tris(3-mercaptopropionat), Pentaerythrit-tetrakis(2-mercaptoacetat), Pentaerythrit-tetrakis(3-mercaptopropionat), Glycerin-tris(2-mercaptoacetat), Glycerin-tris(3-mercaptopropionat), 1,4-Cyclohexandiol-bis(2-mercaptoacetat), 1,4-Cyclohexandiol-bis(3-mercaptopropionat), Hydroxy-methylsulfid-bis(2-mercaptoacetat), Hydroxymethylsulfid-bis(3-mercaptopropionat), Hydroxyethyl-sulfid(2-mercaptoacetat), Hydroxyethylsulfid(3-mercaptopropionat), Hydroxymethyldisulfid(2-mercaptoacetat), Hydroxymethyldisulfid(3-mercaptopropionat), (2-Mercaptoethylester)thioglycolat oder Bis(2-mercaptoethylester)thiodipropionat und aromatischen Thioverbindungen, wie z. B. 1,2-Dimercaptobenzol, 1,3-Dimercaptobenzol, 1,4-Dimercaptobenzol, 1,2-Bis(mercaptomethyl)benzol, 1,4-Bis(mercaptomethyl)benzol, 1,2-Bis(mercaptoethyl)benzol, 1,4-Bis(mercaptoethyl)benzol, 1,2,3-Trimercaptobenzol, 1,2,4-Trimercaptobenzol, 1,3,5-Trimercaptobenzol, 1,2,3-Tris-(mercaptomethyl)benzol, 1,2,4-Tris(mercaptomethyl)benzol, 1,3,5-Tris(mercaptomethyl)benzol, 1,2,3-Tris-(mercaptoethyl)benzol, 1,3,5-Tris(mercaptoethyl)benzol, 1,2,4-Tris(mercaptoethyl)-benzol, 2,5-Toluoldithiol, 3,4-Toluoldithiol, 1,4-Naphthalindithiol, 1,5-Naphthalindithiol, 2,6-Naphthalindithiol, 2,7-Naphthalindithiol, 1,2,3,4-Tetramercaptobenzol, 1,2,3,5-Tetramercapto-benzol, 1,2,4,5-Tetramercaptobenzol, 1,2,3,4-Tetrakis(mercaptomethyl)benzol, 1,2,3,5-Tetrakis-(mercaptomethyl)benzol, 1,2,4,5-Tetrakis(mercaptomethyl)benzol, 1,2,3,4-Tetrakis(mercapto-ethyl)benzol, 1,2,3,5-Tetrakis-(mercaptoethyl)benzol, 1,2,4,5-Tetrakis(mercaptoethyl)benzol, 2,2'-Dimercaptobiphenyl oder 4,4'-Dimercaptobiphenyl. Solche Polythiole können einzeln oder auch in Form beliebiger Gemische untereinander verwendet werden.

Ebenso sind auch Schwefel enthaltende Hydroxyverbindungen geeignet. Solche Verbindungen enthalten bevorzugt mindestens ein Schwefel-Atom in Form von Thiogruppen, Thioethergruppen, Thioesterurethangruppen, Esterthiourethangruppen und/oder Polythioesterthiourethangruppen sowie mindestens eine OH-Gruppe.

Bevorzugte Schwefel enthaltende Hydroxyverbindungen können ausgewählt werden aus der Gruppe, bestehend aus einfachen Mercaptoalkoholen, wie z. B. 2-Mercaptoethanol, 3-Mercaptopropanol, 1,3-Dimercapto-2-propanol, 2,3-Dimercaptopropanol oder Dithioerythritol, Thioetherstrukturen enthaltenden Alkoholen, wie z. B. Di(2-hydroxyethyl)sulfid, 1,2-Bis(2-hydroxyethylmercapto)ethan, Bis(2-hydroxyethyl)disulfid oder 1,4-Dithian-2,5-diol, und Schwefel enthaltende Diole mit Polyesterurethan-, Polythioesterurethan-, Polyesterthiourethan- oder Polythioesterthiourethanstruktur der in der EP-A 1 640 394 genannten Art. Solche Schwefel enthaltenden Hydroxyverbindungen können einzeln oder auch in Form beliebiger Gemische untereinander verwendet werden.

Besonders bevorzugte Schwefel enthaltende Verbindungen sind Polyether- und Polyesterthiole der genannten Art. Ganz besonders bevorzugte Verbindungen können ausgewählt werden aus der Gruppe, bestehend aus 4-Mercaptomethyl-1,8-dimercapto-3,6-dithiaoctan, 1,1,3,3-Tetrakis(mercapto-methylthio)propan, 5,7-Dimercaptomethyl-1,11-dimercapto-3,6,9-trithiaundecan, 4,7-Dimercapto-methyl-1,11-dimercapto-3,6,9-trithiaundecan, 4,8-Dimercaptomethyl-1,11-dimercapto-3,6,9-trithiaun-decan, Trimethylolpropan-tris(2-mercaptoacetat), Trimethylolpropan-tris(3-mercaptopropionat), Pentaerythrit-tetrakis(2-mercaptoacetat) und Pentaerythrit-tetrakis(3-mercaptopropionat).

Ebenso sind auch Carbonsäuren, Carbonsäureanhydride und Epoxide als Verbindungen mit isocyanat-reaktiven Gruppen geeignet.

Es ist ebenfalls möglich, dass die isocyanat-reaktive Komponente Gemische verschiedener Verbindungen mit isocyanat-reaktiven-Gruppen umfasst.

Grundsätzlich kann die Isocyanatgruppen-haltigen Komponente b. beliebige Mischungen verschiedener Polyisocyanate enthalten. Dies können die bereits oben beschriebenen Mischungen oligomerer und monomerer Polyisocyanate sein. Es kann sich auch um Mischungen verschiedener isocyanat-terminierter Präpolymere handeln. Durch die freie Kombination aller geeigneten Polyisocyanate ist es möglich, die Eigenschaften der Formulierung und daraus hergestellter Beschichtungen wunschgemäß einzustellen.

Ebenfalls ist es bevorzugt für die Isocyanatgruppen-haltigen Komponente b., isocyanat-terminierte Präpolymere mit monomeren oder oligomeren Polyisocyanaten zu mischen. Diese Ausführungsform der Erfindung hat den Vorteil, dass monomere und/oder oligomere Polyisocyanate benutzt werden können, um die Viskosität eines isocyanat-terminierten Präpolymers herabzusetzen. Da die monomeren/oligomeren Polyisocyanate durch ihre Isocyanatgruppen untereinander und mit dem isocyanat-terminierten Präpolymer vernetzt werden können, sind diese am Ende ihrer Herstellung in der Formulierung gebunden. Sie wirken so als Reaktivverdünner.

In einer bevorzugten Ausführungsform der Formulierung weist die Formulierung mindestens eine der folgenden Eigenschaften bei Raumtemperatur auf:
(A) eine Ausgangs-Viskosität in einem Bereich von 1 bis 200 mPas, bevorzugt von 1 bis 100 mPas, oder bevorzugt von 5 bis 50 mPas, oder bevorzugt von 5 bis 20 mPas;
(B) eine Ausgangs-Viskosität in einem Bereich von 30 bis 1000 mPas, bevorzugt von 50 bis 500 mPas, oder bevorzugt von 100 bis 500 mPas;
(C) eine Ausgangs-Viskosität in einem Bereich von 50 bis 2000 mPas, oder bevorzugt von 100 bis 1500 mPas, oder bevorzugt von 150 bis 1000 mPas;
(D) eine Ausgangs-Viskosität in einem Bereich von 1000 bis 100000 mPas, bevorzugt von 2000 bis 90000 mPas, oder bevorzugt von 2500 bis 50000 mPas;
(E) einen Gehalt an Isocyanatgruppen von weniger als 60 Gew.-%, bevorzugt weniger als 50 Gew.-%, oder bevorzugt weniger als 30 Gew.-%, oder bevorzugt weniger als 10 Gew.-%, oder bevorzugt weniger als 5 Gew.-%, bezogen auf die Gesamtmenge der Formulierung;
wobei die Formulierung eine der Eigenschaften ausgewählt aus (A) bis (D) in Kombination mit der Eigenschaft (E) aufweist.

Weiterhin bevorzugt weist die Formulierung einen Gehalt an Isocyanatgruppen in einem Bereich von 2 bis 60 Gew.-%, oder bevorzugt in einem Bereich von 3 bis 50 Gew.-%, oder bevorzugt in einem Bereich von 4 bis 35 Gew.-%, oder bevorzugt in einem Bereich von 5 bis 20 Gew.-%, bezogen auf die Gesamtmenge der Formulierung.

Bevorzugt weist die Formulierung mindestens eine der folgenden Eigenschaften bei Raumtemperatur auf:
(A) eine Ausgangs-Viskosität in einem Bereich von 5 bis 20 mPas; oder
(B) eine Ausgangs-Viskosität in einem Bereich von 100 bis 500 mPas; oder
(C) eine Ausgangs-Viskosität in einem Bereich von 150 bis 1000 mPas; oder
(D) eine Ausgangs-Viskosität in einem Bereich von 2500 bis 50000 mPas; und/oder
(E) einen Gehalt an Isocyanatgruppen von weniger als 60 Gew.-%, bezogen auf die Gesamtmenge der Formulierung;
wobei die Formulierung eine der Eigenschaften ausgewählt aus (A) bis (D) in Kombination mit der Eigenschaft (E) aufweist.

Weiterhin bevorzugt weist die Formulierung einen Gehalt an Isocyanatgruppen in einem Bereich von 5 bis 20 Gew.-% auf, bezogen auf die Gesamtmenge der Formulierung.

Die Viskositätsbestimmungen zu (A) bis (D) wurden mit einem Physica MCR 301 (Anton Paar GmbH) mit einer Platte-Platte (Durchmesser 40 mm) Messgeometrie bei 20 °C Messtemperatur durchgeführt. Alle Viskositätsangaben beziehen sich auf eine Scherrate von 500 1/s.

Bevorzugt liegen die dispergierten Pigmente in der Formulierung mit einer mittleren Teilchengröße (Z-Average) von kleiner 20 µm, oder bevorzugt kleiner 5 µm, oder bevorzugt kleiner 1 µm, oder bevorzugt kleiner 0,5 µm, oder bevorzugt kleiner 0,2 µm vor. Außerdem ist es bevorzugt, dass die Verteilung monomodal ist. Weiterhin bevorzugt ist es, dass die Verteilung, angegeben durch den Polydispersitätsindex (PDI), kleiner 0,6, oder bevorzugt kleiner 0,45, oder bevorzugt kleiner 0,35 oder bevorzugt kleiner 0,2 ist.

In einer bevorzugten Ausführungsform der Formulierung weist die Formulierung einen Anstieg der Teilchengröße bei Lagerung bei 50 °C und Normaldruck über einen Zeitraum von 3 Tagen von weniger als 500 %, bezogen auf die ursprüngliche Teilchengröße der Formulierung, bezogen auf den Z-Average gemessen mittels dynamischer Lichtstreuung auf. Die Teilchengrößenmessungen wurden mittels dynamischer Lichtstreuung mit einem Zetasizer Nano ZS (Malvern Instruments Ltd.) bei einer Temperatur von 20 °C durchgeführt. Alle Messwerte beziehen sich stets auf das Intensitätssignal (Z-Average). Der Polydispersitätsindex wird ebenfalls mit Hilfe des Zetasizer Nano ZS bestimmt.

Die Komponente c. kann sowohl Netzmittel oder Dispergiermittel oder gegebenenfalls Netz- und Dispergiermittel beinhalten. Die Komponente c. kann Verbindungen enthalten, die sowohl als Netzmittel als auch als Dispergiermittel fungieren. Als Netzmittel c. können alle dem Fachmann für das Benetzen von Pigmenten geeignete Verbindungen verwendet werden.

Für die zuverlässige Dispergierung und Stabilisierung von Pigmenten in Beschichtungssystemen verwendet man im allgemeinen Dispergiermittel, um so die für eine effektive Dispergierung der Feststoffe benötigten mechanischen Scherkräfte zu reduzieren und gleichzeitig möglichst hohe Füllgrade zu realisieren. Die Dispergiermittel unterstützen das Aufbrechen von Agglomeraten, benetzen und belegen als oberflächenaktive Materialien die Oberfläche der zu dispergierenden Partikel und stabilisieren diese gegen eine unerwünschte Reagglomeration. Die Stabilisierung der Pigmente ist beispielsweise in der Lackindustrie von großer Bedeutung, denn Pigmente bestimmen als wichtiger Formulierungsbestandteil das optische Erscheinungsbild und die physikalisch chemischen Eigenschaften einer Beschichtung. Damit sie in der Beschichtung ihre Wirkung optimal entfalten können, sollten sie während des Dispergierprozesses gleichmäßig und feinteilig im Lack verteilt werden. Die bevorzugt feinverteilten Pigmente sollten stabilisiert werden, damit dieser Zustand bei der Herstellung, der Lagerung, der Verarbeitung und der anschließenden Anwendung wie Filmbildung erhalten bleibt. Eine Wiedervereinigung der Primärteilchen und Aggregate kann zu Bodensatzbildung in Form von harten und/oder weichen Sedimenten, Viskositätserhöhung, Glanzgradverlusten, ungenügender Farbtiefe, geringem Deckvermögen, Auf- und Ausschwimmen der Pigmente und schlecht reproduzierbaren Farbtönen führen wie in Goldschmidt, Streitberger; BASF Handbuch Lackiertechnik, BASF Münster und Vincentz Verlag Hannover 2002, S. 205 ff bereits beschrieben.

Bevorzugt werden Bykjet^{®} 9131, Efka^{®} PX 4701, Disperbyk^{®} 2200, oder eine Mischung aus mindestens zwei hiervon eingesetzt.

Dem Fachmann ist bekannt, dass eine Vielzahl an Pigmenten beispielsweise für die Verwendung in Druckfarben, Lacken oder verwandten Anwendungsgebieten nur schwerlich in Formulierungen dispergierbar sind. Um den Energieeintrag zu verringern, der nötig ist, um Pigmentteilchen in einem flüssigen Medium zu dispergieren, werden daher oftmals Netz- und Dispergiermittel verwendet. Es ist eine Vielzahl von verschiedenen Substanzen bekannt, die heute Verwendung als Dispergiermittel für Pigment und Füllstoffe findet.

Bevorzugt ist das Dispergiermittel c. ausgewählt aus der Gruppe bestehend aus Polymeren und Copolymeren mit funktionellen und/oder pigmentaffinen Gruppen, Alkylammoniumsalzen von Polymeren und Copolymeren, Polymeren und Copolymeren mit sauren Gruppen, Kamm- und Blockcopolymeren, wie Blockcopolymeren mit basischen pigmentaffinen Gruppen, modifizierten Acrylatblockcopolymeren, modifizierten Polyurethanen, modifizierten und/oder versalzten Polyaminen, Epoxid-Amin-Addukten, Phosphorsäureestern von Polyethern, Polyester und Polyether-Estern, basischen oder sauren Ethoxylaten wie alkoxylierten Mono- oder Polyaminen oder sauren 1,2-Dicarbonsäureanhydridhalbestern von alkoxylierten Monoalkoholen, Reaktionsprodukte von ungesättigten Fettsäuren mit Mono-, Di- und Polyaminen, Aminoalkoholen, und ungesättigten 1,2-Dicarbonsäuren und deren Anhydriden und deren Salze und Umsetzungsprodukte mit Alkoholen und/oder Aminen; Polymeren und Copolymeren mit Fettsäureresten, modifizierten Polyacrylaten, wie umgeesterten Polyacrylaten, modifizierten Polyestern, wie säurefunktionellen und/oder aminofunktionellen Polyestern, Polyphosphaten sowie Mischungen aus mindestens zwei hieraus.

Als Dispergiermittel werden bevorzugt solche Verbindungen ausgewählt, wie sie in den Druckschriften, EP 0 154 678 B1 , EP 0 270 126 B1 , EP 031899981 , EP 041749081 , EP 0879860 B1 , EP 0893155 B1 , EP 1081 169 B1 , EP1416019 A1 , EP 1486 524 A1 , EP 1593 700 B1 , EP 1640 389 A1 , EP 1650 246 A1 , EP 1742 990 , EP 1803 753 , EP 1837 355 , DE 102006048144 , DE 102006062439 , DE 102006062440 , DE 102006062441 und DE 102007005720 beschrieben sind.

Als Anreibeharz d. können alle Verbindungen eingesetzt werden, die der Fachmann für eine Formulierung als Anreibeharz auswählen würde. Bevorzugt werden Verbindungen mit definierter Anzahl an isocyanatreaktiven Gruppen als Anreibeharz d. eingesetzt, damit die Formulierung lagerstabil ausgestaltet werden kann. Bevorzugt ist das Anreibeharz d. so ausgewählt, dass das gewünschte Verhältnis von Isocyanatgruppen zu isocyanatreaktiven Gruppen der Formulierung eingehalten werden kann. Bevorzugt enthält das Anreibeharz d. einen Gehalt an Isocyanat-reaktiven Gruppen von kleiner als 15 Gew.-%, oder bevorzugt kleiner als 8 Gew.-%, oder bevorzugt kleiner als 5 Gew.-%, oder bevorzugt kleiner als 2 Gew.-%, bezogen auf die Gesamtmenge des Anreibeharzes.

Beispiele für bevorzugte Verbindungen des Anreibeharzes d. sind ein- zwei, und mehrwertige Alkohole mit primären, sekundären und/oder tertiären OH-Gruppen, analoge Thiole, Polyole, z.B. Polyether-, Polyester-, Polyacrylat-, Polycarbonatpolyole, analoge Polythiole, schwefelhaltige Hydroxyverbindungen, Amine (z.B. primär, sekundär, aliphatisch, cycloaliphatisch, aromatisch, sterisch gehindert), Polyamine, Asparaginsäure Ester sowie Kondensationsharze.

In einer bevorzugte Ausführungsform der Formulierung ist das Anreibeharz d. ausgewählt aus der Gruppe bestehend aus (Poly)Alkoholen, (Poly)Thiolen, (Poly)Aminen, Kondensationsharzen ausgehend von einer Polyaldolreaktion oder einer Mischung aus mindestens zwei hiervon.

Bei den Kondensationsharzen handelt es sich bevorzugt um Aldehydharze. Diese können beispielsweise aus Harnstoff und Butyraldehyd bestehen. Solche Kondensationsharze werden z.B. in DE 102205060158 A1 beschrieben. Weiterhin sind Kondensationsprodukte aus Harnstoff bzw. seinen Derivaten mit Formaldehyd und CH-aciden Aldehyden aus der Patentliteratur bekannt. So erhält man z.B. nach DE 1272284 bei der Umsetzung von Formaldehyd, Harnstoffen und CH-aciden Aldehyden in stöchiometrischen Mengenverhältnissen Ureidopropionaldehyde. Ullmann's Encyclopedia of Industrial Chemistry, Sixth Edition, 2000 Electronic Release beschriebt im Kapitel "Synthetic Resins", Unterkapitel "Ketone and Aldehyde Resins", dort besonders "Aldehyde Resins" die Eigenschaften verschiedener Kondensationsharze, die auf Isobutyraldehyd, Harnstoff und Formaldehyd basieren. Bei den Polyolen sind hier überwiegend höhermolekulare Polyhydroxyverbindungen wie Polyetherpolyole, Polyesterpolyole, Polycarbonatpolyole, Polysiloxanpolyole, sowie Polybutadienpolyole geeignet.

Bevorzugt wird ein vergilbungsbeständiges Kondensationsprodukt aus Harnstoff und aliphatischen Aldehyden (z.B. Laropal^{®} A 81) als Anreibeharzes d. eingesetzt. Alternativ ist es bevorzugt als vergilbungsbeständiges Anreibeharz d. ein schwach verzweigter, hydroxylgruppenhaltiger Polyester (z.B. Desmophen^{®} 670).

Polyetherpolyole sind in an sich bekannter Weise durch Alkoxylierung von geeigneten StarterMolekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Bernsteinsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-butylperoxid.

Des Weiteren können auch Polyamine, wie z. B. die aus EP-B 0 403 921 bekannten Polyasparaginsäurederivate, oder auch solche Polyamine, deren Aminogruppen in blockierter Form vorliegen, wie z. B. Polyketimine, Polyaldimine oder Oxazolane, verwendet werden. Aus diesen blockierten Aminogruppen entstehen unter Feuchtigkeitseinfluss freie Aminogruppen und im Falle der Oxazolane auch freie Hydroxylgruppen, die unter Vernetzung mit Isocyanatgruppen abreagieren können.

Ebenso sind auch Schwefel enthaltende Hydroxyverbindungen geeignet. Solche Verbindungen enthalten bevorzugt mindestens ein Schwefel-Atom in Form von Thiogruppen, Thioethergruppen, Thioesterurethangruppen, Esterthiourethangruppen und/oder Polythioesterthiourethangruppen sowie mindestens eine OH-Gruppe.

Besonders bevorzugte Schwefel enthaltende Verbindungen sind Polyether- und Polyesterthiole der genannten Art.

Das Anreibeharz kann auch aus einer beliebigen Mischung der verschiedenen für die Komponente d. beschriebenen Verbindungen bestehen.

Geeignete Lösemittel sind alle solche Lösemittel e., die die Isocyanatgruppen-haltige Komponente b. bevorzugt vollständig lösen. Bevorzugt werden Lösemittel eingesetzt, die nicht oder nur langsam mit Isocyanaten reagieren und diese bevorzugt vollständig lösen sowie einen Siedepunkt > 30°C und ≤ 300°C aufweisen. Weiterhin bevorzugt sind solche Lösemittel e., die einen geringen Wassergehalt aufweisen, bevorzugt weniger als 1 Gew.-%, bevorzugt weniger als 0,5 Gew.-%, oder bevorzugt weniger als 0,1 Gew.-%, oder bevorzugt weniger als 0,01 Gew.-%,bezogen auf die Gesamtmenge Lösemittel e..

Beispielhaft seien Lösungsmittel beinhaltend Strukturelemente ausgewählt aus Keton, Ester, Ether, alicyclische Ringe, heterocyclische Ringe, Aromaten, Chlor und beliebige Mischungen derselben genannt wie z.B. Ethylacetat, Butylacetat, Methoxypropylacetat, Aceton, Methylethylketon, Methylisobutylketon, Cyclohexanon, Toluol, Xylol, Solventnaphtha^{®} 100 und deren Mischungen.

Bevorzugte Lösungsmittel sind Methylethylketon, Ethylacetat, Butylacetat, Butylglykolacetat und 2-Ethylhexylacetat.

Das Lösemittel e. kann entweder ein einzelnes Lösemittel sein oder eine beliebige Mischung aus mindestens 2 bevorzugt vorgenannten Lösemitteln sein.

Sollten in dem Lösemittel e. Isocyanat-reaktive Gruppen enthalten sein, so werden diese Gruppen bei der Ermittlung des Verhältnisses von Isocyanatgruppen zu isocyanatreaktiven Gruppen bei der Herstellung der Formulierung berücksichtigt. Bevorzugt ist der Gehalt der Isocyanat-reaktiven Gruppen in dem Lösemittel e. kleiner als 20 Gew.-%, oder bevorzugt kleiner als 10 Gew.-%, oder bevorzugt kleiner als 5 Gew.-%, oder bevorzugt kleiner als 3 Gew.-%, bezogen auf die Gesamtmenge Lösemittel e..

### Beispiele

Alle Prozentangaben, bei denen es sich um Gewichtsangaben handelt, beziehen sich stets auf Gewichtsprozent, sofern nicht anders angegeben.

Alle Viskositätsbestimmungen wurden mit einem Physica MCR 301 (Anton Paar GmbH) mit einer Platte-Platte (Durchmesser 40 mm) Messgeometrie bei 20 °C Messtemperatur durchgeführt. Alle Viskositätsangaben beziehen sich auf eine Scherrate von 500 1/s, sofern nicht anders angegeben. Die Ausgangs-Viskosität wird gemäß der Erfindung definiert als die Viskosität nach 1 Stunde nach zusammenfügen sämtlicher gewünschte Komponenten, insbesondere der ausgewählten Komponenten a. bis e..

Alle Teilchengrößenmessungen wurden mittels dynamischer Lichtstreuung mit einem Zetasizer Nano ZS (Malvern Instruments Ltd.) bei einer Temperatur von 20 °C durchgeführt. Alle Messwerte beziehen sich stets auf das Intensitätssignal (Z-Average).

Agglomerierte Pigmentteilchen wurden bei der Herstellung von Pigmentpasten zerkleinert. Hierzu war ein hoher Energieeintrag in das Mahlgut nötig. Der Energieeintrag kann beispielsweise durch Ultraschall, Rotor-Stator-Systemen oder Walzwerken erfolgen. Eine weitere dem Fachmann bekannte Methode ist das Mahlen der Partikel-Agglomerate in dem Medium, in dem sie dispergiert werden sollen, z. B. in Kugel- oder Perlmühlen. Die Herstellung pigmentierter Pasten wurde mit Hilfe eines Dispermat LC30 (VMA-Getzmann GmbH) in einem 125 ml doppelwandigen Temperiergefäß aus Edelstahl hergestellt. In einem ersten Schritt wurden alle Materialien in dieses Gefäß eingewogen und von Hand vermischt. Anschließend wurde mit einer Dispergierscheibe (Durchmesser 30 mm) für 10 Minuten bei 10000 U/min vordispergiert, bis eine homogene Masse (Mahlgut) entstand. Das Dispergierwerkzeug wurde dann durch eine Einfachmahlscheibe aus Polyamid (Durchmesser 32 mm) ersetzt. Dem Mahlgut wurden anschließend Zirkonoxid-Perlen (Yttrium stabilisiert) mit einem mittleren Durchmesser von 0,6 bis 0,8 mm zugefügt. Unter laufender Kühlung wurde das Mahlgut für 90 Minuten bei einer Umdrehungsgeschwindigkeit von 14000 U/min fein gemahlen. Nach der Dispergierung wurden die Mahlperlen durch Filtration entfernt.

Die Herstellung der pigmentierten Isocyanatgruppen-haltigen Formulierungen wurde wie folgt durchgeführt:
Die pigmentierte Paste wurde in einem 30 mL Glasgefäß vorgelegt. Anschließend wurde das Lösemittel (wenn in der Formulierung enthalten) unter Rühren schrittweise zugegeben. In einem letzten Schritt wurde die Isocyanatkomponente schrittweise und unter Rühren zugesetzt. Das Gemisch wurde geschüttelt und für 30 Minuten auf einem Rollenmischer (KG TRM50, IDL GmbH & Co. KG) homogenisiert.

### Materialien

Organische Pigmente können beispielsweise bei der Fa. Clariant SE beschafft werden. Anorganisches Titandioxid kann beispielsweise bei der Fa. Kronos Worldwide Inc. beschafft werden. Schwarze Rußpigmente können beispielsweise bei der Fa. Orion Engineered Carbons GmbH beschafft werden, wie dies für die unten aufgeführten Versuchsergebnisse auch erfolgt ist.

**Tabelle 1: Pigmente**

| **Nr.** | **Name** | **Hersteller** | **Pigmentfarbe** | **Color Index** | **Pigmentklasse (chemisch)** | **Dichte (g/cm³)** | **Primärteilchengröße (nm)** |
|---|---|---|---|---|---|---|---|
| 1 | Hostaperm^{®} Blue BT-617-D | Clariant SE | Cyan | P.B 15:4 | Phthalocyanin | 1,62 | 65 |
| 2 | Inkjet Magenta 5EB02 | Clariant SE | Magenta | P.V. 19 | Chinacridon | 1,5 | 70 |
| 3 | Inkjet Yellow 4GC | Clariant SE | Gelb | P.Y. 155 | Disazo | 1,5 | 90 |
| 4 | Kronos^{®} 2310 | Kronos Worldwide Inc. | Weiß | P.W. 6 | Titandioxid | 4 | *k.A. |
| 5 | NIPex^{®} 35 | Orion Engineered Carbons GmbH | Schwarz | P. Bk. 7 | Furnace Ruß | *k.A. | 31 |

| | | | | | | | |
|---|---|---|---|---|---|---|---|
| * k.A. = keine Angabe | | | | | | | |

Anreibeharze sind bei einer Vielzahl von Herstellern verfügbar. Unter anderem können geeignete Anreibeharze bei der Fa. BASF SE oder bei der Fa. Covestro AG beschafft werden, wie dies für die unten aufgeführten Versuchsergebnisse auch erfolgt ist.

**Tabelle 2: Anreibeharze**

| **Nr.** | **Name** | **Hersteller** | **Klasse (chemisch)** | **OH-Zahl (mg KOH/g)** | **Säurezahl (mg KOH/g)** |
|---|---|---|---|---|---|
| 1 | Laropal A81 | BASF SE | Kondensationsharz aus Harnstoff und aliphatischen Aldehyden | 40 | ≤ 3 |
| 2 | Desmophen 670 | Covestro AG | Hydroxylgruppenhaltiger Polyester | 141,9 | 2 ± 1 |

Beide Anreibeharze aus Tabelle 2 wurden stets zu 70 Gew.-% in Butylacetat verdünnt verwendet.

Lösemittel sind bei einer Vielzahl von Herstellern verfügbar. Unter anderem können geeignete Lösemittel bei der Fa. Sigma-Aldrich beschafft werden, wie dies für die unten aufgeführten Versuchsergebnisse auch erfolgt ist.

**Tabelle 3: Lösemittel**

| **Nr.** | **Lösemittel** | **CAS-Nummer** | **Hersteller** |
|---|---|---|---|
| 1 | Butylacetat (BuAc) ACS reagent, ≥99.5% (GC) | 123-86-4 | Sigma-Aldrich |
| 2 | Butylglykolacetat (BGA) 99% | 112-07-2 | Sigma-Aldrich |

Netz- und Dispergierhilfsmittel (auch Dispergieradditiv genannt) können bei unterschiedlichen Herstellern beschafft werden. Unter anderem bietet die Fa. Byk Additives & Instruments GmbH oder die BASF SE solche Hilfsstoffe an, wie dies für die unten aufgeführten Versuchsergebnisse auch erfolgt ist.

**Tabelle 4: Netz- und Dispergieradditiv (Komponente c.)**

| **Nr.** | **Dispergier -additiv** | **Hersteller** | **Struktur** | **Summe aus Hydroxyl-, Amin- und Säurezahl bezogen auf Lieferform Additiv (mg KOH/g)** | **nfA (%)** |
|---|---|---|---|---|---|
| 1 | Bykjet^{®} 9131 | Byk Additives & Instruments GmbH | Lösung eines strukturierten Copolymeren mit pigmentaffinen Gruppen | 144 | 40 |
| 2 | Efka^{®} PX 4701 | BASF SE | Acrylat Block-Copolymer | 40 | 100 |
| 3 | Disperbyk ^{®} 2200 | Byk Additives & Instruments GmbH | Hochmolekulares Copolymer mit pigmentaffinen Gruppen | k.A. | 100 |

Isocyanate entsprechend der Komponente b. können bei unterschiedlichen Herstellern beschafft werden. Unter anderem bietet die Fa. Covestro AG solche Isocyanate an, wie dies für die unten aufgeführten Versuchsergebnisse auch erfolgt ist.

**Tabelle 5: Isocyanate (Komponente b.)**

| **Nr.** | **Isocyanat** | **Hersteller** | **NCO-Gehalt (%)** |
|---|---|---|---|
| 1 | Desmodur ^{®} H | Covestro AG | Hexamethylendiisocyanat (HDI), monomeres aliphatisches Diisocyanat mit einem Molgewicht von 168, einem Equivalentgewicht von 84, einem NCO-Gehalt ≥ 49,7 % nach DIN EN ISO 11909 und einer Reinheit von ≥ 99,5 % (GC). |
| 2 | Desmodur ^{®} N3400 | Covestro AG | Aliphatisches Polyisocyanat (HDI-Uretdion) mit einem NCO-Gehalt von 21,8 ± 0,7 % nach DIN EN ISO 11909, einer Viskosität bei 23 °C von 175 ± 75 mPas nach DIN EN ISO 3219/A.3 und einem Gehalt an monomeren HDI ≤ 0,3 % nach DIN EN ISO 10283 |
| 3 | **Desmodur** ^{®} N3600 | Covestro AG | Aliphatisches Polyisocyanat (niedrigviskoses HDI-Trimerisat) mit einem NCO-Gehalt von 23,0 ± 0,5 % nach M105-ISO 11909, einer Viskosität bei 23 °C von 1.200 ± 300 mPas nach M014-ISO 3219/A.3 und einem Gehalt an monomeren HDI ≤ 0,25 % nach M106-ISO 10283. |

**Tabelle 6: Beispiele bei verschiedenen NCO/OH Verhältnissen.**

| Beispiel / Einwaage [g] | | | | | | | | |
|---|---|---|---|---|---|---|---|---|
| **Paste** | 1 (Vergleich) | 2 | 3 | 4 | 5 | 6 | 7 | 8 |
| **Anreibeharz d.** | | | | | | | | |
| Laropal^{®} A81 (70 % in BuAc) | | | 6,71 | | 6,71 | | | 6,71 |
| Desmophen^{®} 670 (70 % in BuAc) | 7,49 | 7,49 | | 7,49 | | 7,49 | 7,49 | |

| **Pigmente a.** | | | | | | | | |
|---|---|---|---|---|---|---|---|---|
| Cyan | 41,15 | 41,15 | 37,26 | 41,15 | 37,26 | 41,15 | 41,15 | 37,26 |

| **Additiv (Netz- und/oder Dispergiermittel) c.** | | | | | | | | |
|---|---|---|---|---|---|---|---|---|
| Bykjet^{®} 9131 | 44,03 | 44,03 | 40,1 | 44,03 | 40,1 | 44,03 | 44,03 | 40,1 |

| **Lösemittel** e. | | | | | | | | |
|---|---|---|---|---|---|---|---|---|
| BuAc/BGA 1:2 | 7,33 | 7,33 | 15,93 | 7,33 | 15,93 | 7,33 | 7,33 | 15,93 |

| **Formulierung*** | 1 (Vergleich) | 2 | 3 | 3 | 4 | 5 | 6 | 7 |
|---|---|---|---|---|---|---|---|---|
| Paste aus Komponenten a. + c. - e. | 1,75 | 2,9 | 3 | 2 | 1,5 | 1 | 1 | 1 |
| BuAc/BGA 1:2 Komponente e. | 0,85 | 2,26 | 2,46 | 1,95 | 2,46 | 2,44 | 3,39 | 3,44 |
| Desmodur^{®} N3600 Komponente b. | 2,00 | 5,28 | 5,73 | 4,55 | 5,74 | 5,69 | 7,91 | 8,04 |
| **NCO/NCO reaktive Gruppen** | **5:1** | **8:1** | **10:1** | **10:1** | **20:1** | **25:1** | **35:1** | **42:1** |
| Ausgangs-Viskosität [mPa*s] | 127 | 113 | 74 | 71 | 69,4 | 67 | 58,4 | 56 |
| rel. Änderung der Viskosität [%], nach a, b Tagen Lagerung bei 50 °C | 1168^{a} | 369^{a} | 320^{b} | 323^{b} | 148^{b} | 100^{b} | 75^{b} | 71^{b} |
| rel. Änderung des Z-Average [%], nach 14 Tagen Lagerung bei 50 °C | n.b.** | n.b.** | n.b.** | n.b.** | -17,0 | -12,9 | -15,0 | -12,6 |
| Erfindungsgemäß | Nein | Ja | Ja | Ja | Ja | Ja | Ja | Ja |
| Stabil | Nein | Ja | Ja | Ja | Ja | Ja | Ja | Ja |

| | | | | | | | | |
|---|---|---|---|---|---|---|---|---|
| * Formulierungen 1 bis 8 wurden jeweils hergestellt aus Pasten 1 bis 8, ** nicht bestimmt, a: nach 3 Tagen, b: nach 14 Tagen | | | | | | | | |

**Tabelle 7: weitere Erfindungsgemäße Beispiele**

| | | | | | | | | | | |
|---|---|---|---|---|---|---|---|---|---|---|
| Beispiel / Einwaage [g] | 9 | 10 | 11 | 12 | 13 | 14 | 15 | 16 | 17 | 18 |

| **Paste** | | | | | | | | | | |
|---|---|---|---|---|---|---|---|---|---|---|
| **Anreibeharz d. (aus Tabelle 2)** | | | | | | | | | | |
| Laropal^{®}A81 (70 % in BuAc) | 6,71 | 54,83 | 6,79 | 50,06 | 29,66 | 6,71 | 6,79 | 6,71 | 6,79 | 45,87 |

| **Pigmente a. ( aus Tabelle 1)** | | | | | | | | | | |
|---|---|---|---|---|---|---|---|---|---|---|
| Cyan 1 | 37,26 | | | | | 37,26 | | 37,26 | | |
| Magenta 2 | | 21,70 | | | | | | | | |
| Gelb 3 | | | 37,77 | | | | 37,77 | | 37,77 | |
| Weiß 4 | | | | 36,70 | | | | | | 35,7 |
| Schwarz 5 | | | | | 23,63 | | | | | |

| **Netz- und Dispergiermittel c. (aus Tabelle 4)** | | | | | | | | | | |
|---|---|---|---|---|---|---|---|---|---|---|
| Bykjet^{®} 9131 | 40,10 | | 40,58 | | | 40,10 | 40,58 | 40,10 | 40,58 | |
| Efka^{®} PX 4701 | | | | | 13,01 | | | | | 3,58 |
| Disperbyk^{®} 2200 | | 5,03 | | 1,65 | | | | | | |

| **Lösemittel e. (aus Tabelle 3)** | | | | | | | | | | |
|---|---|---|---|---|---|---|---|---|---|---|
| BuAc/BGA 1:2 | 15,93 | 18,45 | 14,85 | 11,59 | 33,7 | 15,93 | 14,85 | 15,93 | 14,85 | 14,85 |

| **Formulierung*** | 9 | 10 | 11 | 12 | 13 | 14 | 15 | 16 | 17 | 18 |
|---|---|---|---|---|---|---|---|---|---|---|
| Paste | 1,61 | 1,40 | 1,59 | 0,82 | 1,27 | 0,81 | 0,79 | 0,81 | 0,79 | 0,84 |
| BuAc/BGA 1:2 | 5,52 | 2,58 | 5,52 | 2,75 | 2,62 | | | 0,92 | 0,92 | 2,75 |

| **Isocyanat b. (aus Tabelle 5)** | | | | | | | | | | |
|---|---|---|---|---|---|---|---|---|---|---|
| Desmodur^{®} H | | | | | | 9,19 | 9,21 | | | |
| Desmodur^{®} N3400 | | | | | | | | 8,28 | 8,29 | |
| Desmodur^{®} N3600 | 12,87 | 6,02 | 12,89 | 6,43 | 6,11 | | | | | 6,41 |
| **NCO/NCO-reaktive Gruppen** | **42:1** | **87:1** | **42:1** | **172:1** | **110:1** | **128:1** | **130:1** | **51:1** | **51:1** | **166:1** |
| Ausgangs-Viskosität [mPa*s] | 53,4 | 68,2 | 62,9 | 60 | 55 | 3,2 | 3,0 | 105 | 103 | 55,1 |
| rel. Änderung des Z-Average [%] nach 14 Tagen Lagerung bei 50 °C | -11,6 | 5,5 | -16,8 | 3,2 | -5,4 | -13,7 | 51,21 | -13,4 | -14 | 8,2 |
| rel. Änderung der Viskosität [%] nach 14 Tagen Lagerung bei 50 °C | 35,6 | 45 | 23,1 | 29 | 50 | 22 | 33 | 51 | 83 | 34,8 |
| Erfindungsgemäß | Ja | Ja | Ja | Ja | Ja | Ja | Ja | Ja | Ja | Ja |
| Stabil | Ja | Ja | Ja | Ja | Ja | Ja | Ja | Ja | Ja | Ja |

| | | | | | | | | | | |
|---|---|---|---|---|---|---|---|---|---|---|
| * Formulierungen 9 bis 18 wurden jeweils hergestellt aus Pasten 9 bis 18 | | | | | | | | | | |

Das Beispiel 1 zeigt einen Viskositätsanstieg von mehr als 500 % nach dreitägiger Lagerung bei 50 °C und ist daher nicht erfindungsgemäß. Alle anderen Beispiele sind erfindungsgemäß.

## Patentansprüche

1. Ein Verfahren zur Herstellung einer Isocyanatgruppen-haltigen Formulierung mindestens mit den Schritten:
i. Anreiben mindestens eines Pigments in mindestens einem Anreibeharz in Anwesenheit mindestens eines Netzmittels und/oder Dispergiermittels unter Erhalt einer Pigmentanreibung,
ii. gegebenenfalls Verdünnen der erhaltenen Pigmentanreibung aus Schritt i. mit Lösungsmittel,
iii. Mischen der Pigmentanreibung aus Schritt i. oder Schritt ii. mit einer Isocyanatgruppen-haltigen Komponente unter Erhalt der Isocyanatgruppen-haltigen Formulierung,
wobei das molare Verhältnis der Summe der Isocyanatgruppen zu der Summe aller isocyanatreaktiven Gruppen in der Formulierung mindestens 8:1 beträgt.

2. Verfahren gemäß Anspruch 1, wobei die Formulierung lagerstabil ist und enthält:
a. 0,01 bis 45 Gew.-% mindestens eines Pigments;
b. 1 bis 99 Gew.-% mindestens einer Isocyanatgruppen-haltigen Komponente;
c. 0,01 bis 20 Gew.-% mindestens eines Netzmittels und/oder Dispergiermittels;
d. 0,1 bis 30 Gew.-% mindestens eines Anreibeharzes;
e. 0 bis 80 Gew.-% Lösemittel;
jeweils bezogen auf die Gesamtmenge der Formulierung, wobei die Summe aller Bestandteile der Formulierung 100 Gew.-% nicht übersteigt und
wobei weiterhin die Formulierung nach Lagerung bei 50 °C über einen Zeitraum von mindestens 3 Tagen einen Viskositätsanstieg von weniger als 500 % aufweist, bezogen auf die Ausgangs-Viskosität der Formulierung, gemessen gemäss Beschreibung.

3. Verfahren gemäß Anspruch 1 oder 2, wobei die Isocyanatgruppen-haltige Komponente ausgewählt ist aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan und 1,10-Diisocyanatodecan, 1,3- und 1,4-Bis-(isocyanatomethyl)benzol (Xyxlylendiisocyanat; XDI), 1,3- und 1,4-Bis(1-isocyanato-1-methylethyl)-benzol (TMXDI), 2,4- und 2,6-Diisocyanatotoluol (TDI), 2,4'- und 4,4'-Diisocyanatodiphenylmethan (MDI) und 1,5-Diisocyanatonaphthalin, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), oder einer Mischung aus mindestens zwei hiervon, sowie gegebenenfalls Oligomere und Reaktionsprodukte hiervon.

4. Verfahren gemäß einem der vorhergehenden Ansprüche, wobei die Isocyanatgruppen-haltige Komponente aus aliphatischen oder cycloaliphatischen Isocyanaten besteht.

5. Verfahren gemäß einem der vorhergehenden Ansprüche, wobei das Anreibeharz ausgewählt ist aus der Gruppe bestehend aus (Poly)Alkoholen, (Poly)Thiolen, (Poly)Aminen, Kondensationsharzen ausgehend von einer Polyaldolreaktion oder einer Mischung aus mindestens zwei hiervon.

## Claims

1. Process for preparing an isocyanate group-containing formulation at least comprising the steps:
i. dispersing at least one pigment in at least one grinding resin in the presence of at least one wetting agent and/or dispersant, to obtain a pigment dispersion,
ii. optionally diluting the pigment dispersion obtained from step i. with solvent,
iii. mixing the pigment dispersion from step i. or step
ii. with an isocyanate group-containing component to obtain the isocyanate group-containing formulation,
wherein the molar ratio of the sum of the isocyanate groups to the sum of all isocyanate-reactive groups in the formulation is at least 8:1.

2. Process according to Claim 1, wherein the formulation is storage stable and contains:
a. 0.01% to 45% by weight of at least one pigment;
b. 1% to 99% by weight of at least one isocyanate group-containing component;
c. 0.01% to 20% by weight of at least one wetting agent and/or dispersant;
d. 0.1% to 30% by weight of at least one grinding resin;
e. 0% to 80% by weight of solvents;
based in each case on the total amount of the formulation, with the sum of all constituents in the formulation not exceeding 100% by weight, and
wherein furthermore the formulation after storage at 50°C over a period of at least 3 days exhibits a rise in viscosity of less than 500%, based on the starting viscosity of the formulation, measured in accordance with the description.

3. Process according to Claim 1 or 2, wherein the isocyanate group-containing component is selected from the group consisting of 1,4-diisocyanatobutane (BDI), 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- and 2,4,4-trimethyl-1,6-diisocyanatohexane and 1,10-diisocyanatodecane, 1,3- and 1,4-bis(isocyanatomethyl)benzene (xylylene diisocyanate; XDI), 1,3- and 1,4-bis(1-isocyanato-1-methylethyl)benzene (TMXDI), 2,4- and 2,6-diisocyanatotoluene (TDI), 2,4'- and 4,4'-diisocyanatodiphenylmethane (MDI) and 1,5-diisocyanatonaphthalene, 1-isocyanato-3,3,5-trimethyl-5-isocyanatomethylcyclohexane (isophorone diisocyanate; IPDI), 1-isocyanato-1-methyl-4(3)-isocyanatomethylcyclohexane, 2,4'- and 4,4'-diisocyanatodicyclohexylmethane (H12MDI), or a mixture of at least two of these, and optionally oligomers and reaction products of these.

4. Process according to any of the preceding claims, wherein the isocyanate group-containing component consists of aliphatic or cycloaliphatic isocyanates.

5. Process according to any of the preceding claims, wherein the grinding resin is selected from the group consisting of (poly)alcohols, (poly)thiols, (poly)amines, condensation resins originating from a polyaldol reaction or a mixture of at least two of these.

## Revendications

1. Procédé de fabrication d'une formulation contenant des groupes isocyanate, comprenant au moins les étapes suivantes :
i. le broyage d'au moins un pigment dans au moins une résine de broyage en présence d'au moins un agent mouillant et/ou dispersant, de manière à obtenir une dispersion pigmentaire,
ii. le cas échéant, la dilution de la dispersion pigmentaire obtenue à l'étape i. avec un solvant,
iii. le mélange de la dispersion pigmentaire de l'étape i. ou de l'étape ii. avec un composant contenant des groupes isocyanate, de manière à obtenir la formulation contenant des groupes isocyanate,
le rapport molaire de la somme des groupes isocyanate à la somme de tous les groupes réactifs vis-à-vis des isocyanates dans la formulation étant d'au moins 8:1.

2. Procédé selon la revendication 1, la formulation étant stable au stockage et contenant :
a. 0,01 à 45% en poids d'au moins un pigment ;
b. 1 à 99 % en poids d'au moins un composant contenant des groupes isocyanate ;
c. 0,01 à 20 % en poids d'au moins agent mouillant et/ou dispersant ;
d. 0,1 à 30 % en poids d'au moins une résine de broyage ;
e. 0 à 80 % en poids de solvant ;
à chaque fois par rapport à la quantité totale de la formulation, la somme de tous les constituants de la formulation ne dépassant pas 100 % en poids, et
dans lequel, en outre, la formulation, après stockage à 50 °C pendant une période d'au moins 3 jours, présente une augmentation de viscosité inférieure à 500 %, par rapport à la viscosité initiale de la formulation, mesurée conformément à la description.

3. Procédé selon la revendication 1 ou 2, dans lequel le composant contenant des groupes isocyanate est constitué par le 1,4-diisocyanatobutane (BDI), le 1,5-diisocyanatopentane (PDI), le 1,6-diisocyanatohexane (HDI), le 2-méthyl-1,5-diisocyanatopentane, le 1,5-diisocyanato-2,2-diméthylpentane, le 2,2,4- ou le 2,4,4-triméthyl-1,6-diisocyanatohexane et le 1,10-diisocyanatodécane, le 1,3- et le 1,4-bis(isocyanatométhyl)benzène (diisocyanate de xylylène ; XDI), le 1,3- et le 1,4-bis(1-isocyanato-1-méthyléthyl)benzène (TMXDI), le 2,4- et le 2,6-diisocyanatotoluène (TDI), le 2,4'- et le 4,4'-diisocyanatodiphénylméthane (MDI) et le 1,5-diisocyanatonaphtalène, le 1-isocyanato-3,3,5-triméthyl-5-isocyanatométhylcyclohexane (diisocyanate d'isophorone ; IPDI), le 1-isocyanato-1-méthyl-4(3)-isocyanatométhylcyclohexane, le 2,4'- et le 4,4'-diisocyanatodicyclohexylméthane (H12MDI), ou un mélange d'au moins deux de ceux-ci, ainsi que, le cas échéant, leurs oligomères et produits de réaction.

4. Procédé selon l'une quelconque des revendications précédentes, dans lequel le composant contenant des groupes isocyanate est constitué d'isocyanates aliphatiques ou cycloaliphatiques.

5. Procédé selon l'une quelconque des revendications précédentes, dans lequel la résine de broyage est sélectionnée dans le groupe constitué par les (poly)alcools, les (poly)thiols, les (poly)amines, les résines de condensation issues d'une réaction de polyaldol, ou un mélange d'au moins deux de ceux-ci.
